Europäisches Patentamt

European Patent Office

Office européen des brevets

(11) Veröffentlichungsnummer : **0 370 471 B1**

(12) **EUROPÄISCHE PATENTSCHRIFT**

(19)

(45) Veröffentlichungstag der Patentschrift :
19.08.92 Patentblatt 92/34

(21) Anmeldenummer : 89121531.1

(22) Anmeldetag : 21.11.89

(51) Int. Cl.⁵ : **H04N 9/31**

(54) **Lichtventilprojektor zur Wiedergabe von Farbfernsehsignalen.**

(30) Priorität : **23.11.88 DE 3839438**

(43) Veröffentlichungstag der Anmeldung :
**30.05.90 Patentblatt 90/22**

(45) Bekanntmachung des Hinweises auf die
Patenterteilung :
**19.08.92 Patentblatt 92/34**

(84) Benannte Vertragsstaaten :
**AT DE FR GB IT**

(56) Entgegenhaltungen :
**PATENT ABSTRACTS OF JAPAN, Band 12, Nr.
44 (E-581)[2891], 9. Februar 1988; & JP-A-62
194 788 (SONY CORP.) 27-08-1987
PATENT ABSTRACTS OF JAPAN, Band 11, Nr.
320 (E-550)[2767], 17. Oktober 1987; & JP-A-62
109 489 (KAWASAKI HEAVY IND. LTD)20-
05-1987
PATENT ABSTRACTS OF JAPAN, Band 13, Nr.
144 (E-740)[3492], 10. April 1989; & JP-A-63 306
792 (CANON INC.) 14-12-1988**

(73) Patentinhaber : **GRUNDIG E.M.V.
Elektro-Mechanische Versuchsanstalt Max
Grundig holländ. Stiftung & Co. KG.
Kurgartenstrasse 37
W-8510 Fürth/Bay. (DE)**

(72) Erfinder : **Kays, Rüdiger, Dr.-Ing. GRUNDIG
E.M.V.
Max Grundig holländ. Stiftung & Co KG
Kurgartenstrasse 37 D-8510 Fürth/Bay (DE)**

(74) Vertreter : **Dreykorn-Lindner, Werner,
Dipl.-Ing.
GRUNDIG E.M.V. Elektro-Mechanische
Versuchsanstalt Max Grundig holländ.Stiftung
& Co. KG Lizenz- und
PatentabteilungKurgartenstrasse 37
W-8510 Fürth/Bayern (DE)**

EP 0 370 471 B1

**Beschreibung**

Die Erfindung betrifft einen Lichtventilprojektor nach dem Oberbegriff des Patentanspruchs 1.

Zur Großbildprojektion von Farbfernsehbildern werden meist Bildwiedergabeanordnungen mit drei getrennten Bildröhren benutzt, denen eine Projektionsoptik nachgeordnet ist. Es sind zwei verschiedene Typen von Projektoren bekannt. Beim Frontprojektor wird das Bild von vorne auf den Projektionsschirm von der Projektionsoptik projiziert, die in der Regel räumlich getrennt angeordnet ist. Beim Rückwandprojektor wird das Bild dagegen von hinten auf den Projektionsschirm projiziert (und damit in Durchsicht betrachtet).

In der Regel sind drei Projektions-Kathodenstrahlröhren für die Fernsehgrundfarben rot, grün und blau vorgesehen. Diese sind meist nebeneinander so angeordnet, daß die Projektionsoptik auf dem Projektionsschirm ein vergrößertes, konvergentes Farbbild erzeugt. Je nach Betrachtungsrichtung ergeben sich Farbverschiebungen, welche z.B. bewirken, daß der Bildeindruck von links betrachtet rotstichig und von rechts betrachtet blaustichig wirkt. Bedingt durch einen relativ großen Ablenkwinkel müssen im allgemeinen umfangreiche Ablenk- und Konvergenzschaltungen vorgesehen werden. Im anderen Fall ergeben sich Unschärfen durch Geometriefehler. Weitere Nachteile solcher Fernseh-Großbildprojektoren mit Projektions-Kathodenstrahlröhren sind darin zu sehen, daß diese voluminös und schwer sind und daß stets ein Kompromiß zwischen Bildhelligkeit und Auflösung eingegangen werden muß.

Anstelle einer aktiven Bilderzeugung, wie beispielsweise bei Kathodenstrahlröhren, Gasentladungsbildschirmen (Plasmadisplays) und Elektroluminiszenz-Bildschirmen, ist auch eine passive Bilderzeugung mit Hilfe einer Steuerschicht bekannt, welche von einem Flüssigkristall oder einem viskosen Flüssigkeitsfilm gebildet wird. Bei der passiven Bilderzeugung sind Lichterzeugung und Bilderzeugung räumlich voneinander getrennt und steuerbar. Die Darstellung von Farbbildern erfolgt durch Projektion von drei monochromen Fernsehbildern, welche sich auf dem Projektionsschirm überlagern.

Aus der DE-A- 35 31 502 ist eine Bildwiedergabeanordnung zur farbigen Abbildung eines durch Primärfarbensignale übertragenen Videobildes bekannt. Eine Einlesesteueranordnung nimmt das Einspeichern der ankommenden Primärfarbensignale in einem Farbsignalspeicher derart vor, daß die digitalisierten, einem Bildpunkt zugeordneten Primärfarbensignale zeilenweise in den Farbsignalspeicher eingelesen werden. Eine Auslesesteueranordnung und eine Bildpunktsteueranordnung sind über Zeilensynchronsignale und Bildsynchronsignale so miteinander verknüpft, daß die Bildpunktsteueranordnung das Aufzeichnen einer Bildpunktzeile einer bestimmten Zeilennummer steuert und gleichzeitig die Auslesesteueranordnung nacheinander die in dem Farbsignalspeicher eingespeicherten Primärfarbensignale ausliest und dem Eingang eines Displays zuführt. Auf der Bildschirmfläche des Displays entstehen drei Teilbilder als Farbintensitätsbilder der drei Primärfarben rot, grün und blau. Diese Teilbilder liegen in horizontaler oder vertikaler Richtung nebeneinander. Der Bildschirmfläche des Displays ist eine optische Einrichtung nachgeschaltet, in welcher die drei Strahlengänge der drei Teilbilder zu einem Farbbild auf einer Abbildungsfläche zusammengesetzt werden. Die optische Einrichtung kann dichroitische Spiegel oder Linsen- oder Prismensysteme und in den Strahlengängen angeordnete Farbfilter aufweisen.

Eine solche Bildwiedergabeanordnung weist den Nachteil auf, daß bei einer Wiedergabe von normgemäßen Farbfernsehbildern keine Unterdrückung der Grundstruktur der Rasters vorgenommen werden kann und daß die Werte für Chrominanz- und Luminanzauflösung einander entsprechen.

Die Tatsache, daß für eine gute Bildqualität eine besonders hohe Lumianzauflösung erforderlich ist, die Chrominanzauflösung hingegen vergleichsweise geringer sein kann, wird hierbei nicht genutzt.

Schließlich ist aus der japanischen Anmeldung JP-A-62 194 788 ein Lichtventilprojektor zur Wiedergabe von Farbfernsehsignalen, bestehend aus einer Beleuchtungsoptik, aus mindestens zwei Lichtventilen, insbesondere drei Flüssigkristall-Lichtventilen und aus einer Projektionsoptik bekannt, welche die monochromen Filterelemente der Lichtventile überlagert und vergrößert auf einem Projektionsschirm abbildet. Dabei werden die Bildelemente der verschiedenen Lichtventile, welche unterschiedliche Farbauszüge darstellen, gegeneinander um einen Teil der Bildelementbreite versetzt abgebildet.

Ein ganz ähnlicher Lichtventilprojektor ist aus der japanischen Patentanmeldung JP-A-62 109 489 vorbekannt, bei dem die abgebildeten Bildelemente, welche den roten und blauen Farbauszug darstellen, gegenüber den abgebildeten Bildelementen, welche den grünen Farbauszug darstellen in horizontaler und vertikaler Filterrichtung um 1/3 versetzt sind.

Der Erfindung liegt die Aufgabe zugrunde, einen Lichtventilprojektor derart auszugestalte, daß eine Erhöhung der Luminanzauflösung ermöglicht wird.

Diese Aufgabe wird bei einem gattungsgemäßen Lichtventilprojektor durch die kennzeichnenden Merkmale des Patentanspruchs 1 gelöst.

Durch die geometrische Offset-Anordnuug der Bildelemente der verschiedenen Lichtventile werden bei der Projektion Zwischenwerte darstellbar und damit die Luminanzauflösug erhöht. Weiterhin wird auf überrasched einfache Art und Weise bei einem Lichtventilprojektor eine Reduzierung der Sichtbarkeit der Rasterstruktur erreicht. Aus der Zeitschrift "Fernseh- und Kino-Technik, 42. Jahrgang, Nr. 9/1988, Seiten 423 bis 428" ist eine CCD-Kamera bekannt, bei der eine räumliche Offset-Anordnung der drei CCD-Bildaufnahmeelemente vorgesehen ist, wodurch eine Unterdrückung der Aliasfrequenzen und eine Erhöhung der Luminanzautlösung erzielt wird.

Weiterhin weist die erfindungsgemäße Offset-Anordnung den Vorteil auf, daß die Luminanzerhöhung in beiden Bildrichtungen gleich ist.

Durch die Anordnung eines optischen Filters im Projektionsstrahlengang gemäß Patentanspruch 2 ist eine weitere Reduktion der Sichtbarkeit der Rasterstruktur möglich.

Die Ausführungsform des Lichtventilprojektors gemäß Patentanspruch 3 weist den Vorteil auf, daß keine Konvergenzfehler auftreten, welche bei Kanten und Strukturen im Bild unerwünschte Farbsäume verursachen.

Die Erfindung wird im folgenden anhand einer in der Zeichnung dargestellten Ausführungsform näher beschrieben und erläutert.

Es zeigt:

Fig. 1 schematisch den Aufbau eines Lichtventilprojektors gemäß der Erfindung und

Fig. 2a, Fig. 2b die Anordnung der Bildelemente in der Projektionsebene beim Stand der Technik und beim erfindungsgemäßen Lichtventilprrojektor.

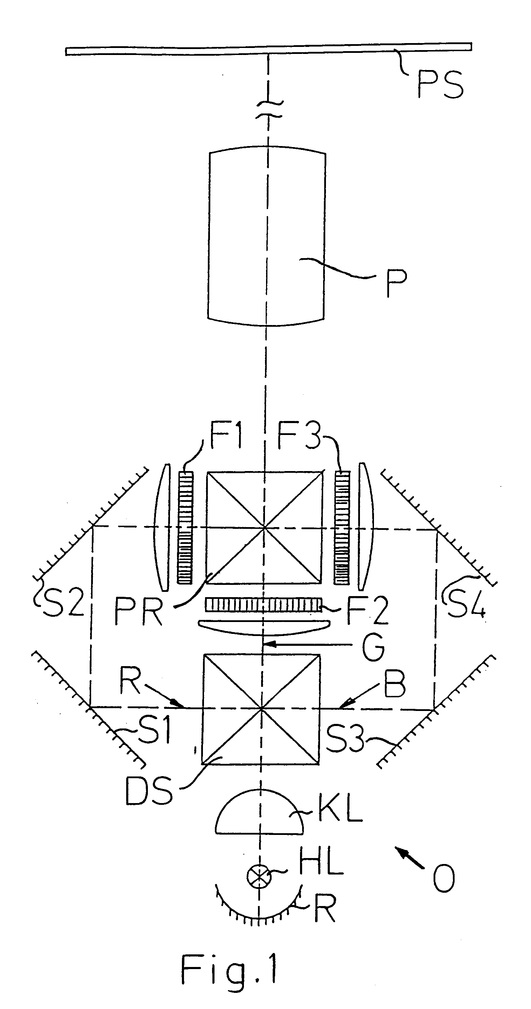

Fig. 1 zeigt schematisch den Aufbau eines Lichtventilprojektors mit dichroitischen Spiegeln zur Farbteilung, mit drei Flüssigkristall-Lichtventilen, mit einem dichroitischen Prisma zur Uberlagerung der monochromen Bilder und mit einer Projektionsoptik. Ein solcher Lichtventilprojektor ist beispielsweise in der Zeitschrift "ntz, Band 41 (1988), Heft 6, Seite 351" beschrieven. Das Licht der Halogenlampe HL wird von einem Reflector R reflektiert, von einer Kondensor-Linse KL gebündelt und durch drei dichroitische Spiegel DS in die drei Primärferben zerlegt. Die so erzeugten roten, grünen und blauen Lichtstrahlen werden über entsprechend angeordnete Spiegel S1 bis S4 der Beleuchtungsoptik O umgelenkt und gelangen zu den Flüssigkristall-Lichtventilen F1 bis F3.

Die Bildelemente der verschiedene Flüssigkristallzellen F1 bis F3, welche unterschiedliche Farbkomponente steuern, sind erfindungsgemäß gegeneinander um einen Teil des Bildelementabsandes, vorzugsweise im Raster um einenhalben Bildelement abstand in horizontaler und vertikaler Bildrichtung, versetzt angeordnet. Den Flüssigkristall-Lichtventilen F1 bis F3 ist ein dichroitisches Prisma PR nachgeordnet, in welchem die monochromen Bildelemente der Flüssigkristall-Lichtventile F1 bis F3 überlagert werden. Das so erzeugte Farbbild wird durch eine dem dichroitischen Prisma PR nachgeordnete Projektionsoptik P vergrößert und auf einem Projektionsschirm PS abgebildet.

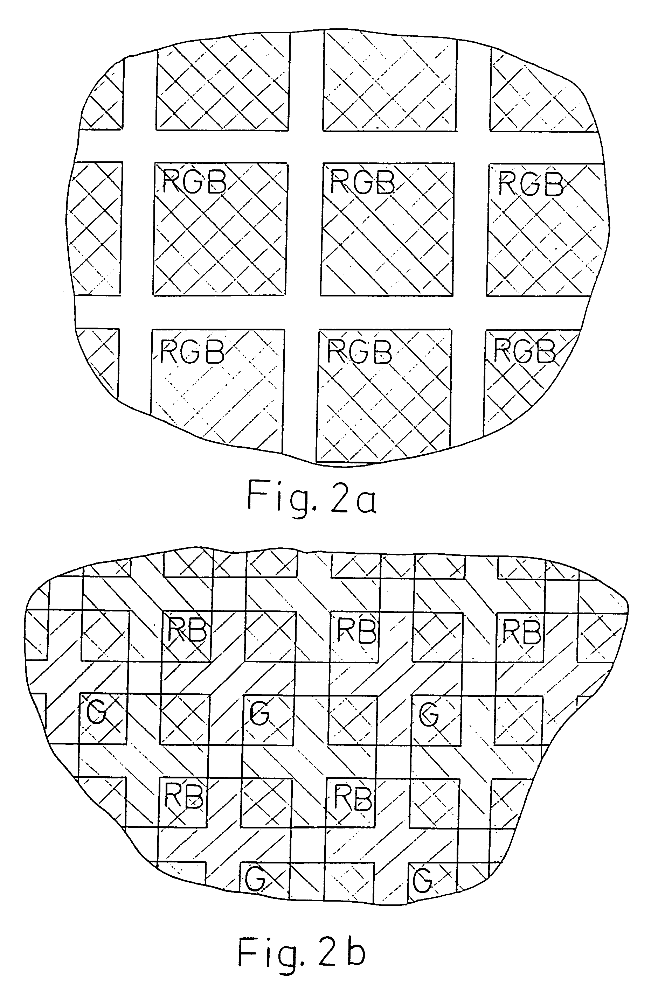

Fig. 2a und 2b zeigen die Anordnung der Bildelemente in der Projektionsebene beim Stand der Technik und beim erfindungsgemäßen Lichtventilprojektor. Bei der in Fig. 2b dargestellten Anordnung der Bildelemente wirddurch die geometrische Offset-Anordnung der Bildelemente in horizontaler und vertikaler Bildrichtung - sowohl eine Unterdrückung der Grundstruktur des Rasters vorgenommen als auch eine Erhöhung der Luminanzauflösung erzielt.

In einer Signalverarbeitungsschaltung werden aus den Abtastwerten eines oder mehrerer Farbauszüge neue Bild-Abtastwerte derart berechnet, daß die Lage der versetzten Bildelemente und die Lage der neuen Bild-Abtastwerte übereinstimmt. Weiterhin kann die Signalverarbeitungsschaltung eine vertikale und/oder horizontale Filterung mit einer Korrektur des Frequenzgangs durchführen. Durch diese Korrektur kann die durch die horizontale und vertikale Ausdehnung der Bildelemente hervorgerufene horizontale und vertikale Auflösungsreduktion kompensiert werden. Dabei wird in vorteilhafter Weise, unter Berücksichtigung der Wahrnehmungseigenschaften des menschlichen Auges, eine verbesserte Wiedergabequalität bei hoher Farbreinheit erzielt.

Durch eine Anordnung eines optischen Filters im Projektionsstrahlengang ist eine weitere Unterdrückung der Rasterstruktur möglich.

## Patentansprüche

1. Lichtventilprojektor zur Wiedergabe von Farbfernsehsignalen, bestehend aus einer Beleuchtungsoptik (0), aus drei Lichtventilen, insbondere drei Flüssigkristall-Lichtventilen (z.B. F1), und aus einer Projektionsoptik (P), welche die monochromen Bildelemente der Lichtventile überlagert und vergrößert auf einem projektionsschirm (PS) abbildet, wobei die Bildelemente der verschiedenen Lichtventile (z.B. F1), welche unterschieliche Farbauszüge darstellen gegeneinander um Teil des Bildelementabstandes versetzt abgebildet werden, dadurch gekennzeichnet, daß für jeden Farbauszug je ein Flüssigkristall-Lichtventil (z.B. F1) vorgesehen ist und daß die abgebildeten nicht gegeneinander versetzten Bildelemente, welche den roten und blauen Farbauszug darstellen, gegenüber den abgebildeten Bildelementen, welche den grünen Farbauszug darstellen, um einen halben Bildelementabstand in horizontaler und vertikaler Bildrichtung versetzt sind.

2. Lichtventilprojektor nach Anspruch 1, dadurch gekennzeichnet, daß im Projektionsstrahlengang ein optisches Filter angeordnet ist.

3. Lichtventilprojektor nach einem der Ansprüche 3, bis 2, dadurch gekennzeichnet, daß eine Signalverarbeitungsschaltung vorgesehen ist, welche aus den Abtastwerten eines oder mehrerer Farbauszüge neue Bild-Abtastwerte derart berechnet, daß die Lage der versetzten Bildelemente und die Lage der neuen Bild-Abtastwerte übereinstimmt.

4. Lichtventilprojektor nach Anspruch 3, dadurch gekennzeichnet, daß die Signalverarbeitungsschaltung eine vertikale und/oder horizontale Filterung mit einer Korrektur des Frequenzganges derartig durchführt, daß die durch die Ausdehnung der einzelnen Bildelemente hervorgerufene Auflösungsreduktion kompensiert wird.

## Claims

1. Light valve projector for reproducing colour television signals, consisting of illumination optics (0), of three light valves, particularly three liquid-crystal light valves (for example F1), and of projection optics (P) which image the monochrome picture elements of the light valves superimposed and enlarged on a projection screen (PS), the picture elements of the various light valves (for example F1) which represent different colour separations being imaged offset with respect to one another by a portion of the picture element spacing, characterised in that one liquid crystal light valve (for example F1) each is provided for each colour separation and that the picture elements imaged, which represent the red and blue colour separation and are not offset with respect to one another, are offset by half a picture element spacing in the horizontal and vertical image direction with respect to the picture elements imaged which represent the green colour separation.

2. Light valve projector according to Claim 1, characterised in that an optical filter is arranged in the projection beam path.

3. Light valve projector according to one of Claims 1 to 2, characterised in that a signal processing circuit is provided which calculates new picture samples from the samples of one or several colour separations, in such a manner that the position of the offset picture elements corresponds to the position of the new picture samples.

4. Light valve projector according to Claim 3, characterised in that the signal processing circuit carries out a vertical and/or horizontal filtering with a correction of the frequency response in such a manner that the reduction in resolution caused by the expansion of the individual picture elements is compensated for.

## Revendications

1. Projecteur à modulateurs de lumière pour la reproduction de signaux de télévision en couleurs, constitué par un système optique d'éclairement (0) constitué par trois modulateurs de lumière, notamment trois modulateurs de lumière à cristal liquide (par exemple F1), et par un système optique de projection (P), qui superpose les éléments monochromes de l'image des modulateurs de lumière et en forme l'image agrandie sur un écran de projection (PS), les éléments d'image des différents modulateurs de lumière (par exemple F1), qui représentent des composantes chromatiques différentes, étant reproduits en étant décalés les uns par rapport aux autres d'une partie de la distance entre les éléments d'image, caractérisé en ce que pour chaque composante chromatique, il est prévu respectivement un modulateur de lumière à cristal liquide (par exemple F1), et que les éléments d'image reproduits, qui ne sont pas décalés entre eux et représentent les composantes chromatiques rouge et bleue, sont décalés de la moitié de la distance entre les éléments d'image dans les directions horizontales et verticales de l'image, par rapport aux éléments d'image reproduits, et qui représentent la composante chromatique verte.

2. Projecteur à modulateurs de lumière selon la revendication 1, caractérisé en ce qu'un filtre optique est disposé dans le trajet du faisceau de projection.

3. Projecteur à modulateurs de lumière selon l'une des revendications 1 et 2, caractérisé en ce qu'il est prévu un circuit de traitement des signaux, qui calcule, à partir des valeurs d'échantillonnage d'une ou de plusieurs composantes chromatiques, de nouvelles valeurs d'échantillonnage de l'image de telle sorte que la position des éléments d'image décalés et la position des nouvelles valeurs d'échantillonnage de l'image coïncident.

4. Projecteur à modulateurs de lumière selon la revendication 3, caractérisé en ce que le circuit de traitement des signaux exécute un filtrage vertical et/ou horizontal avec une correction de la réponse en fréquence de telle sorte que la réduction de résolution, qui est due à la dilatation des différents éléments d'image, est compensée.

Fig.1

Fig. 2a

Fig. 2 b